# EUROPEAN PATENT APPLICATION

(11) **EP 3 907 576 A1**
(43) Date of publication of application: **10.11.2021**
(21) Application number: 19907809.8
(22) Date of filing: 24.09.2019
(51) Int. Cl.: G05D 1/02

(54) **GRAIN PROCESSING SELF-DRIVING SYSTEM, SELF-DRIVING METHOD, AND AUTOMATIC RECOGNITION METHOD**

(30) Priority: 04.01.2019 CN 201910007336
(71) Applicant: FJ Dynamics Technology Co., Ltd, Xiangyang Hubei (CN)
(72) Inventor: WU, Di, Xiangyang, Hubei 441100 (CN); ZHANG, Xiao, Xiangyang, Hubei 441100 (CN); WANG, Qingquan, Xiangyang, Hubei 441100 (CN); TONG, Chao, Xiangyang, Hubei 441100 (CN); SHEN, Yongquan, Xiangyang, Hubei 441100 (CN); WANG, Bo, Xiangyang, Hubei 441100 (CN); FAN, Shun, Xiangyang, Hubei 441100 (CN); CHEN, Rui, Xiangyang, Hubei 441100 (CN)
(74) Representative: Zaboliene, Reda
(86) International application number: PCT/CN2019/107537
(87) International publication number: WO 2020/140492

(57) **Abstract**

An automatic driving system for grain processing, an automatic driving method, and an automatic identification method is illustrated. The automatic driving system includes a grain processing host, an image acquiring device, and an image processing system. The image acquiring device is provided in the grain processing host. The image acquiring device acquires at least one image around the grain processing host. The image processing system identifies areas in the image by utilizing an image segmentation and identification technique on the basis of the image acquired by the image acquiring device. The grain processing host automatedly controls driving based on the areas identified by the image processing system.

## Description

### TECHNICAL FIELD

The present disclosure relates to agriculture, to self-driving agricultural machinery, and especially relates to an automatic driving system for grain processing, and an automatic driving method and an automatic identification method.

### BACKGROUND

Agricultural machinery refers to various machinery used in the initial processing process of agricultural products and animal products, as well as in the production of crop cultivation and animal husbandry. The type of the agricultural machinery is various, such as seeding equipment, land-turning equipment, target equipment, spin-till equipment, plant protection equipment, harvesting equipment and so on. In the operation process, the agricultural machinery needs to move and carry out an activity on the farm. When the agricultural machinery is in motion on the farmland, it is necessary to adjust an operation route of the agricultural machinery according to an operation condition of the farmland.

When the agricultural machinery is operating in farmland, it is necessary to determine the operation condition of the farmland and the crop growth of the farmland in real time, and to operate the operation of the agricultural machinery and the operating system according to the operation condition of the farmland and the crop growth of the farmland. In the prior art, operating the agricultural machinery can be done by a driver or other agricultural worker. The agricultural machinery needs to take into account of a finished area of the farmland, an unfinished area of the farmland, as well as boundaries and many other factors, and in the operation process of the agricultural machinery, an operation of a vehicle and operation parameters needs to be adjusted in real time according to the condition of the crop. As a complex operating environment needs to be considered during the motion, the agricultural equipment of the existing technology requires the operator/driver to adjust the operation of the agricultural machinery based on real-time information of the farmland crop. The probability of error in the operation of agricultural machinery is greater with manual operation, which leads to increase failure probability of the mechanical equipment in the course of operation.

Agricultural machinery of existing technology is not smart, and it is not possible to get rid of the driver's driving operation of the agricultural equipment. Based on the PTK satellite positioning method, a high-precision satellite positioning information can be obtained, but for self-driving agricultural machinery, especially harvester equipment, in the operation, it is more important to determine a harvest area, and an un-harvested area of the current farmland crop, and the boundary area of the farmland and other information, in order to accurately operate or adjust the operation of the agricultural machinery. The agricultural machinery of the existing technology is not able to determine the accuracy of farmland areas, and in the course of operation to the agricultural machinery is usually in accordance with a set path. Once a route deviation occurs, it is difficult to adjust and modify in a timely manner. Therefore, due to the operating path not being accurate, the operation of the agricultural machinery of the existing technology usually results in errors in the operation, and even serious mechanical failure. In addition, when using the PTK satellite positioning method, the agricultural equipment has a high performance requirements, and the required manufacturing costs and maintenance costs of the agricultural equipment are high, so the self-driving positioning of the existing technology of is not applicable to the self-driving mode of the current agricultural machinery.

### SUMMARY OF THE DISCLOSURE

A purpose of the present disclosure provides an automatic driving system for grain processing, and an automatic driving method and an automatic identification method, the automatic driving system for grain processing divides images of the area of the farmlands so as to provide technical support for the automatic driving system.

Another purpose of the present disclosure provides an automatic driving system for grain processing, and an automatic driving method and an automatic identification method, wherein the automatic driving system divides the area of the farmland into an unworked area, a worked area, and a farmland boundary area for the automatic driving system to select a route according to the divided area.

Another purpose of the present disclosure provides an automatic driving system for grain processing, and an automatic driving method and an automatic identification method, wherein the automatic driving system for grain processing is a harvester operation equipment, the harvester operation equipment divides the farmland area into an unharvested area, a harvested area, and a farmland boundary area, so that the harvester operation equipment can plan an operation route of the harvester operation equipment according to type of the divided area.

Another purpose of the present disclosure provides an automatic driving system for grain processing, and an automatic driving method and an automatic identification method, wherein an image processing system of the automatic driving system uses an image segmentation identification technology to identify image area of the acquired image, and divides unworked area, worked area, and farmland boundary area of the farmland, and boundary between the two adjacent areas.

Another purpose of the present disclosure provides an automatic driving system for grain processing, and an automatic driving method and an automatic identification method, wherein the automatic driving system acquires the surrounding image information in real time and transmits the acquired image information to the image processing system, so as to adjust the area boundaries identified by the automatic driving system during the driving process.

Another purpose of the present disclosure provides an automatic driving system for grain processing, and an automatic driving method and an automatic identification method, wherein the automatic driving system acquires the image information around a vehicle in real time, and updates the area and the boundary of the farmland identified by the image identification system based on the acquired image information, so as to provide technical support for accurate motion of the vehicle.

Another purpose of the present disclosure provides an automatic driving system for grain processing, and an automatic driving method and an automatic identification method, wherein the image processing system of the automatic driving system uses an image segmentation technology to identify unworked area, worked area, and farmland boundary area, and divides the boundaries of two adjacent areas, based on the acquired visual graphics information of the image.

Another purpose of the present disclosure provides an automatic driving system for grain processing, and an automatic driving method and an automatic identification method, wherein the automatic driving system does not require high precision satellite positioning, therefore reducing difficulty in manufacturing the automatic driving equipment, and also reducing the maintenance cost of the automatic driving equipment.

Another purpose of the present disclosure provides an automatic driving system for grain processing, and an automatic driving method and an automatic identification method, wherein the automatic driving system carries out path planning based on the area division information output by the image processing system to realize automatic driving and automatic driving operation.

According to an aspect of the present disclosure, the present disclosure provides an automatic identification method, applied in an automatic driving system for grain processing and dividing and identifying area of farmland, the automatic identification method includes:

step (a): acquiring at least one image of farmland around a grain processing host; and

step (b): segmenting the image into a plurality of pixel regions, and identifying the area of the image by an image segmentation identification technology.

According to an embodiment of the present disclosure, the automatic identification method further includes: the step (a) further including: based on position of the automatic driving system for grain processing, photographing the image around the automatic driving system for grain processing in real time.

According to an embodiment of the present disclosure, the automatic identification method further includes: the step (b) further including: segmenting the image by using the image segmentation technology, and identifying and dividing the area of the image into the unworked area, the worked region, and the farmland boundary area.

According to an embodiment of the present disclosure, the step (b) further includes:
step (b.1): dividing the image into a plurality of the pixel regions, and normalizing the pixel values of the pixel regions into an array;
step (b.2): extracting features of the pixel regions of each array; and
step (b.3): outputting a classification label of the image based on the features of the pixel regions.

According to an embodiment of the present disclosure, in the step (b.3), the classification labels correspond to the unworked area, the worked region, and the farmland boundary area.

According to an embodiment of the present disclosure, the step (b) further includes: an image processing system segmenting the image by a deep learning algorithm, identifying and dividing the area of the image.

According to an embodiment of the present disclosure, the automatic identification method further including:
step (c): comparing whether the divided area identified by an image processing system is consistent with the area boundary range identified by the image processing system; adjusting the divided area and the area boundary range corresponding to the image when the divided area is not consistent with the area boundary range; and keeping the divided area and the area boundary range unchanged when the divided area is consistent with the area boundary range.

According to another aspect of the present disclosure, the present disclosure provides an automatic driving method for automatic driving system for grain processing, automatic driving method includes:
step (I): acquiring at least one image and identifying area of farmland and boundary of farmland in the image;
step (II): based on the area and the area boundary of the farmland, controlling a grain processing host to move.

According to an embodiment of the present disclosure, the step (I) further includes: segmenting the image by an image segmentation identification technology; and dividing the area of the image into the unworked area, the worked region, and the farmland boundary area.

According to an embodiment of the present disclosure, the step (II) further includes:
obtaining positioning information of the grain processing host; and
based on the positioning information, identification information of the farmland, updating navigation information of a navigation system.

According to an embodiment of the present disclosure, the step (II) further includes: a driving control system controlling a driving of a vehicle of the grain processing host according to the positioning information of the grain processing host, area planning information of the farmland, and the navigation information.

According to an embodiment of the present disclosure, the step (II) further includes: the driving control system controlling the vehicle to drive in the unworked area to carry out an operation task.

According to another aspect of the present disclosure, the present disclosure provides an automatic driving system for grain processing, the automatic driving system includes:
a grain processing host;
an image acquisition device, wherein the image acquisition device is arranged on the grain processing host, and the image acquisition device acquires at least one image around the grain processing host;
an image processing system, wherein the image processing system identifies the area in the image acquired by the image acquisition device, based on an image segmentation recognition method, and the grain processing host controls automatic driving according to the area in the image identified by the image processing system.

According to an embodiment of the present disclosure, the image acquisition device is a camera device, the camera device is set in front of the grain processing host, and the image acquisition device acquires image of the scene in front of the grain processing host by photographing.

According to an embodiment of the present disclosure, wherein the image processing system identifies at least one worked area, at least one unworked area, and at least one farmland boundary area from the image.

According to an embodiment of the present disclosure, the image processing system further includes:
an image segmentation module, the image segmentation module segments the image into a plurality of pixel regions, and each pixel region includes at least one pixel unit;
a feature module, wherein the feature module extracts features of each pixel region based on the pixel unit of the pixel region; and
a region division module, wherein the region division module identifies and divides the area of the image according to the features of the pixel region.

According to an embodiment of the present disclosure, wherein the feature module further includes a pixel processing module, and the pixel processing module normalizes the pixel units of the pixel region into an array.

According to an embodiment of the present disclosure, wherein the automatic driving system for grain processing further includes a positioning device and a navigation system, the positioning device and the navigation system are arranged on the grain processing host, wherein the positioning device acquires position information of the grain processing host, and the navigation system provides navigation information for the grain processing host.

According to an embodiment of the present disclosure, wherein the grain processing host further includes:
a vehicle body, wherein the vehicle provides driving and operation power;
an operation system, wherein the operation system is arranged on the vehicle, and the operation system is driven by the vehicle; and
a driving control system, wherein the driving control system controls the vehicle to move and operate automatically based on the positioning information of the positioning device, the navigation information, and image recognition information.

Further objects and advantages of the present invention will be fully disclosed by the following description and drawings.

### BRIEF DESCRIPTION OF THE DRAWINGS

FIG. 1 is a schematic diagram of one embodiment of an automatic driving system for grain processing.
FIG. 2 is a schematic diagram of an embodiment of acquiring image in the automatic driving system for grain processing of FIG.1.
FIG. 3A is a schematic diagram of an embodiment of acquiring one image by the automatic driving system for grain processing of FIG.1.
FIG. 3B is a schematic diagram of an embodiment of acquiring another image by the automatic driving system for grain processing of FIG.1.
FIG. 3C is a schematic diagram of an embodiment of acquiring another image by the automatic driving system for grain processing of FIG.1.
FIG. 4 is a schematic diagram of one embodiment of an image processing system of the grain processing automatic driving system divides and identifies area of the image.
FIG. 5A is a schematic diagram of one embodiment of an image processing system of the grain processing automatic driving system segments area of the image.
FIG. 5B is a block diagram of one embodiment of an image processing system of the automatic driving system for grain processing.
FIG. 6 is a schematic diagram of one embodiment of an image processing system of the automatic driving system extracting and identifying area feature of the image.
FIG. 7 is a schematic diagram of one embodiment of an image processing system of the automatic driving system outing the divided area of the image.
FIG. 8 is a schematic diagram of one embodiment of an image processing system of the automatic driving system outputting a boundary division change of the divided area of the image.
FIG. 9 is a schematic diagram of one embodiment of an automatic driving scenario of the automatic driving system for grain processing.

### DETAILED DESCRIPTION

The following description is used to disclose the present invention so that the technical personnel in the art can realize the present invention. The preferred embodiments described below are for example only, and technical personnel in the field can think of other obvious variant embodiments. The basic principles of the present invention as defined in the following description do apply to other embodiments, deformation embodiments, improvement schemes, equivalent schemes and other technical schemes that do not deviate from the spirit and scope of the present invention.

The technical personnel in the art shall understand that, in the disclosure of the present invention, the term "portrait direction", "horizontal direction", "up", "down", "front", "back", "left", "right", "vertical", "horizontal", "top", "bottom", "inside", "outer" and other indicative orientation or positional relationship is based on the orientation or position relationship shown in the drawings, and is intended to facilitate the description of the present invention and simplify the description, rather than to indicate or imply that the device or component must have a specific orientation, in a specific direction and operation, therefore, the above terms are not to be taken as limitations on the present invention.

Understandably, the term "one" should be understood as "at least one" or "one or more", i.e. in one embodiment, the quantity of one component may be one, while in another embodiment the quantity of components may be multiple, and the term "one" cannot be understood as a limit on the quantity.

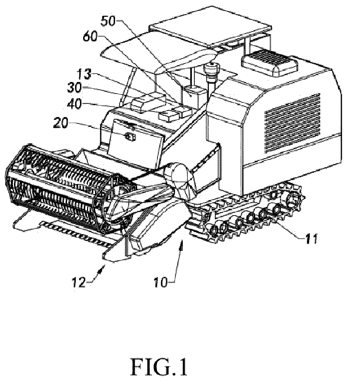

Referring to Figures 1 to 9 of the specification of the present invention, illustrates an automatic driving system for grain processing, and an automatic driving method and path planning method in accordance with a first embodiment of the present invention. The automatic driving system for grain processing may be implemented as a crop harvester equipment with grain processing function, a crop seeding equipment, a crop ploughing equipment, and a crop plant protection equipment. Understandably, the type of an automatic driving system for grain processing device described in the present invention is only as an example, not as a limitation. Therefore, other types of crop equipment can also be used here. The automatic driving system obtains at least one image of environment, and visually identifies the area type of the farmland of the image after processing the image, and divides various area types and boundaries of the farmland in the image.

The automatic driving system for grain processing shall divide the area type of the farmland according to the types and boundaries of each divided area, the area type divided by the automatic driving system include at least one worked area 100, at least one unworked area 200, and at least one field boundary area 300. The automatic driving system for grain processing determines a route of a vehicle by a navigation system according to the divided area type, so as to achieve automatic achievement of task.

It is worth mentioning that a self-driving vehicle, in a self-driving mode, needs to obtain accurate vehicle positioning information, especially high-precision satellite positioning information in order to identify a route, and the self-driving vehicle needs to update obstacles in the road, road vehicle information, as well as road pedestrians and other information, in order to achieve self-driving function at high speed. The image obtained by the automatic driving system of the invention is an image corresponding to the crop grain in a farmland, and the image is of the scene around the vehicle and the image is obtained based on the current position of the vehicle. The automatic driving system does not require high precision satellite positioning information, but merely ordinary meter-scale accuracy of satellite positioning (GPS positioning or Beidou positioning, etc.). In addition, the image obtained and processed by the automatic driving system is different from the image obtained by the self-driving vehicle. Therefore, the path planning and driving mode determined by the automatic driving system are not the same as the path planning and driving mode determined by the self-driving vehicle. Understandably, the identification mode of automatic driving system of the present invention identifying the area of the farmland and the self-driving function based on visual identification is different from the identification mode the self-driving vehicle.

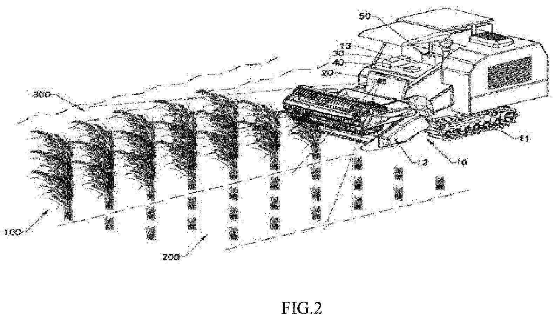

Referring to Figures 1 and 2, the automatic driving system obtains at least one image of the surrounding environment, and identifies area types of the farmland and the boundary between the areas of the farmland from the images. The automatic driving system obtains the image by means of fixed-point photography mode, video mode, mobile photography mode, etc. Understandably, the way in which the automatic driving system obtains images is here only as an example, not as a limitation. The automatic driving system includes a grain processing host 10 and at least one image acquisition device 20, wherein the image acquisition device 20 obtains at least one image of scene around the grain processing host 10.

Preferably, the image acquisition device 20 is set in the grain processing host 10. In one embodiment, the image acquisition device 20 by taking still or moving pictures around the grain processing host 10. More preferably, the image acquisition device 20 is set in front part of the grain processing host 10. In one embodiment, the image acquisition device 20 can obtain the images in real time in front of the grain processing host 10. The grain processing host 10 identifies the divided area of the farmland from the images obtained by the image acquisition device 20, and sets a driving route according to the divided area of the farmland. In one embodiment, the content of the image obtained by the image acquisition device 20 is within the field of view of the grain processing host 10. In other words, the image acquisition device 20 obtains images of scene within the field of view of grain processing host 10, and adjusts a travel direction of grain processing host 10 according to a position that the grain processing master 10 is installed on the grain processing host 10.

In one embodiment, the image acquisition device 20 takes images in the travel direction of the grain processing host 10 to obtain the image. In one embodiment, the image may be a two-dimensional flat image or a three-dimensional image. Understandably, the type of the image taken by the image acquisition device 20 is here only as an example, not as a limitation.

It one embodiment, the grain processing host 10 is capable of finishing processing of crop grain during a driving process, such as the processing of crop grain includes harvesting, farming, ploughing, plant protection operations, etc. For example, in a first embodiment of the present invention, the grain processing host 10 is a harvester equipment, and the grain processing host 10 is controlled to driving to the unworked area 200 of the farmland for harvesting operation, in order to harvest the crop within the unworked area 200 of the farmland. The corps can be rice, wheat, corn and so on. The grain processing host 10 executes automatic driving in the farmland according to the divisions taken from the image obtained by the image acquisition device 20, conducts self-driving in the field, without a driver. Understandably, the type of the grain processing host 10 is here only as an example, not as a limitation.

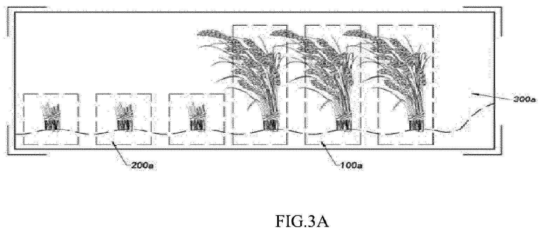

As shown in FIG. 3A to FIG. 3C, the image acquisition device 20 acquires images around the grain processing host 10 in real time during the driving process of the grain processing host 10. Fig. 3A shows the image captured by the image acquisition device 20 when the grain processing host 10 is a grain harvester. Based on whether the grain is harvested or not, the area of the farmland is divided into at least one unharvested area 100a, at least one a harvested area 200a, and at least one a farmland boundary area 300a. In one embodiment, the harvested area 200a is the area where the crop has been harvested. The unharvested area 100a is an area where crop still grows, and the growing crop still exists in the unharvested area 100a. The farmland boundary area 300a is a ridge separating crops in the farmland, an outer boundary around the farmland, or an area or feature constituting an obstacle in the farmland. In one embodiment, there are no crops in the farmland boundary area 300a.

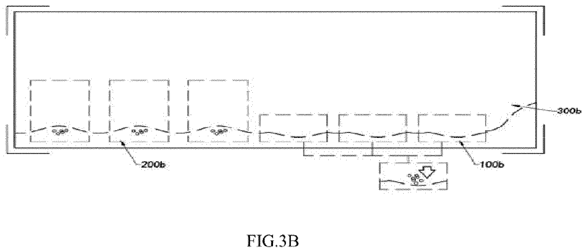

FIG. 3B shows the image captured by the image acquisition device 20 when the grain processing host 10 is a grain fanning machine. According to whether the grain is cultivated or not, the area of the farmland is divided into at least one uncultivated area 100b, at least one cultivated area 200b, and at least one farmland boundary area 300b, wherein the uncultivated area 100b is the area where the crop has not been cultivated, and the cultivated area 200b represents the area where the crop has been cultivated. The farmland boundary area 300b is a ridge separating crop in the farmland, an outer boundary around the farmland, or an obstacle area in the farmland.

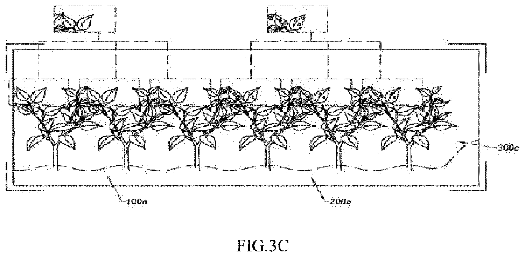

FIG. 3C shows the image captured by the image acquisition device 20 when the grain processing host 10 is used as a grain plant protection device, such as a pesticide spraying device. The area in the farmland is divided into at least one non spraying area 100c, at least one spraying area 200c and at least one farmland boundary area 300c. The non spraying area 100c represents the area where the crops have not been sprayed with pesticide, the spraying area 200c represents the area where the crops have been sprayed with pesticide, and the farmland boundary 300b is ridge that separating crops in the farmland, an outer boundary of the farmland, and the area where there are obstacles in the farmland.

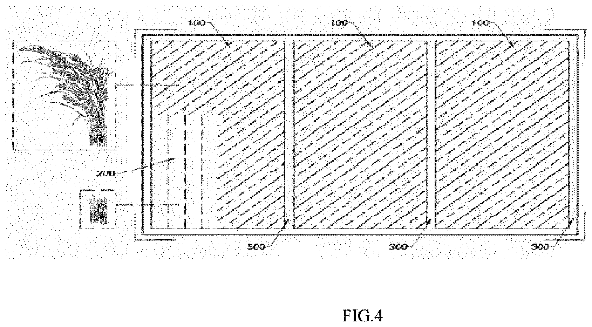

As shown in FIG. 1 and FIG. 4, by image segmentation recognition method, the unworked area 100, the worked area 200, and the farmland boundary area 300 are identified from the image obtained by the image acquisition apparatus 20, and the boundaries between the areas (the unworked area 100, the worked area 200, and the farmland boundary area 300) are distinguished. The automatic driving system for grain processing further includes an image processing system 30, wherein the image processing system 30 identifies the unworked area 100, the worked area 200, and the farmland boundary area 300 from the image obtained by the image acquisition device 20. It should be noted that the image processing system 30 uses the image segmentation recognition method to identify the areas and boundaries from the image, and the areas represent the areas of the farmland in front of the grain processing host 10, and the boundaries represent the boundaries of the farmland in front of the grain processing host 10. Based on the areas and boundaries identified by the image processing system 30 using the image segmentation recognition technology, the grain processing host 10 is controlled to drive and operate in the unworked area in the farmland. For example, the image acquisition device 20 set at the front end of the harvester device acquires an image of the farmland in front of the harvester device, wherein the image captured by the image acquisition device 20 is segmented and identified by the image processing system 30 to identify the unworked area 100, the worked area 200, the working area 200, and the farmland boundary area 300. The grain processing host 10, that is, the host of the harvester device, plans the vehicle driving path and harvesting operation based on the areas and boundaries identified by the image processing system 30.

In one embodiment, the image processing system 30 segments and identifies the image acquired by the image acquisition device 20 to the areas and boundaries of the image based on one of a segmentation method based on threshold, a segmentation method based on a region, a segmentation method based on edge, and a segmentation method based on a specific theory. In one embodiment, the image processing system 30 uses a deep learning algorithm to segment and identify the image and perform area division and boundary limitation on the image. In other words, the image processing system 30 uses the deep learning algorithm to identify the corresponding areas of the farmland and the boundary of the farmland from the image, and the grain processing host drive and operate according to the identified areas of the farmland and the boundary of the farmland. More preferably, the image processing system 30 uses the image segmentation and identification technology of the convolution neural network algorithm as the deep learning algorithm to identify the unworked area 100, the worked area 200 and the farmland boundary area 300 from the image.

It is worth mentioning that the processing algorithm used by the image processing system 30 is only an example here, not a limitation. Therefore, the image processing system 30 can also use other algorithms to segment and identify the obtained image, so as to identify the area of the farmland and the boundary of the farmland from the image.

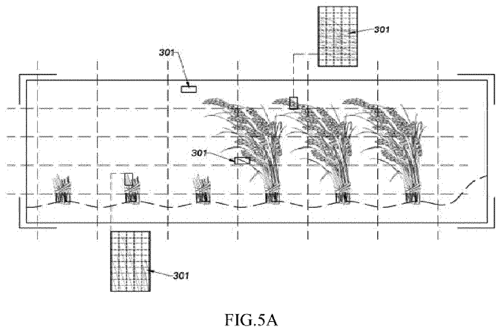

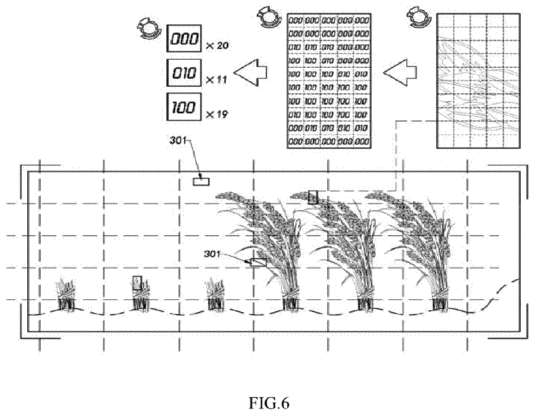

Referring to FIG. 5A and FIG. 6, the image processing system 30 segments the image obtained by the image acquisition device 20 into a number of pixel regions 301, each of the pixel regions 301 includes at least one pixel unit. It should be noted that the image corresponds to the area around the grain processing host 10, and accordingly, the pixel area 301 of the image corresponds to the farmland in a specific area or the image information of the crop. Each pixel region 301 formed by segmentation is normalized so that the pixel unit of the pixel region 301 is normalized to a value or to an array corresponding to the size of the pixel value. In other words, the image processing system 30 normalizes the segmented pixel region 301 into a corresponding values or arrays for the image processing system to extract image features and divide the areas.

The image processing system 30 extracts the image features corresponding to the pixel region 301 based on the array corresponding to each pixel region 301. The image processing system 30 obtains the image features corresponding to the pixel region 301 according to the array corresponding to the pixel region 301. In one embodiment, when the image processing system 30 uses the convolutional neural network algorithm, such as a two-dimensional convolutional neural network, an input layer of the convolutional neural network corresponds to the two-dimensional array or three-dimensional array in the pixel area 301. A hidden layer of the convolutional neural network extracts features from the array of the input layer, selects features and filters selected features. The convolutional neural network outputs a classification label of the pixel area 301 based on the features corresponding to the array, and the classification labels correspond to the unworked area 100, the worked area 200, and the farmland boundary area 300 respectively.

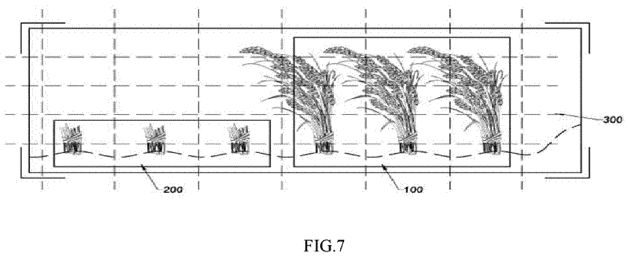

Referring to FIG. 6 and FIG. 7, the image processing system 30 identifies the regional features corresponding to the pixel region 301 by extracting the features of the array of the pixel region 301. In one embodiment, the features corresponding to the pixel region 301 includes a height feature of crop plants, the spacing of crop plants in the farmland, the color of crop, the color of farmland land, the type features of the crop, the height features of the crop, a spacing between the crop in the farmland, the color features of the crop, the color features of the farmland, the type features of the crop, the features of the farmland, the fullness degree of the crop particles, a quantity of the crop particles, etc. The image processing system 30 outputs a classification label corresponding to the pixel region 301 according to the extracted features. In one embodiment, the classification label correspondingly identifies the type of the area and the boundary corresponding to the pixel region 301 based on the extracted features.

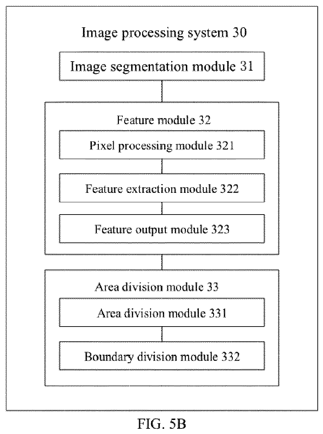

Referring to FIG. 5B, the image processing system 30 includes an image segmentation module 31, a feature module 32, and an area division module 33. The image segmentation module 31 acquires the image captured by the image acquisition device 20, and generates a number of pixel regions 301 by segmenting and processing the image. In one embodiment, each pixel region 301 includes at least one pixel unit. The feature module 32 uses the deep learning algorithm to extract the type of the feature of the pixel area 301, selects the feature and filters the selected feature. The area division module 33 divides the image based on the features of the pixel region 301 extracted by the feature module 32 to generate the classification label corresponding to the unworked area 100, the worked area 200, or the farmland boundary area 300.

In one embodiment, the image segmentation module 31 divides the image into a number of the pixel regions 301, each of the pixel regions 301 has the same size, shape, and range. It should be noted that the image segmentation module 31 can segment the image according to a threshold of the image pixel. Namely, the sizes, shapes, and ranges of the pixel regions 301 segmented by the image segmentation module 31 can be different. In one embodiment, the pixel area 301 divided by the image segmentation module 31 is a single pixel unit when the feature module 32 of the image processing system 30 adopts the convolution neural network algorithm to segment the image.

In one embodiment, the feature module 32 includes a pixel processing module 321, a feature extraction module 322, and a feature output module 323. The pixel processing module 321 processes the array of the pixel unit in the pixel area 301. In one embodiment, the pixel processing module 321 normalizes the pixel area 301 into an array suitable for processing. The feature extraction module 322 inputs the array of the pixel area 301 processed by the pixel processing module 321, extracts the type of the features corresponding to the array, selects the features, and filters the selected features, to retain available data and eliminate interference data, so as to better prepare the features. The feature output module 323 outputs the features extracted by the feature extraction module 322, and the area division module 33 generates a classification label of the corresponding area in combination with the features output by the feature output module 323.

The area division module 33 divides the areas of the image and sets area boundaries based on the features of the pixel region 301 extracted by the feature module 32. Correspondingly, the area division module 33 further includes an area division module 331 and a boundary division module 332. The area division module 331 divides different areas according to the features of the pixel region 301, and the boundary division module 332 divides boundary range of the areas, so as to determine the range of the area.

During the driving process of the grain processing host 10 of the automatic driving system for grain processing, the image acquisition device 20 acquires the images in front of the grain processing host 10 in real time. Accordingly, the image processing system 30 acquires the image captured by the image acquisition device 20 in real time, and uses the image segmentation and identification technology to identify the divided area and the area boundary range corresponding to the farmland in the image. When the divided area and the area boundary range identified by the image processing system 30 is not consistent with the previous area boundary range, the identified area and area boundary range corresponding to the image are adjusted.

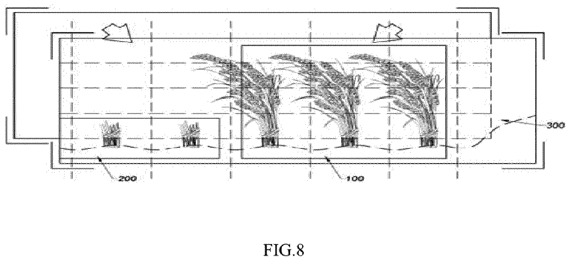

Referring to FIG. 8, the grain processing host 10 can be affected by vibration and minor deviations and bumps when in motion. When the direction of the grain processing host 10 is deviated or the divided area is changed due to the vibration of the vehicle, the image processing system 30 updates the divided area and the area boundary range of the image in real time.

Referring to FIG. 1, the automatic driving system further includes a positioning device 40 and a navigation system 50. In one embodiment, the positioning device 40 is arranged on the grain processing host 10. The positioning device 40 obtains positioning information of the grain processing host 10. In one embodiment, the positioning device 40 uses the positioning information of the satellite to obtain the position information of the grain processing host 10. The positioning device 40 can be a GPS device or a Beidou Positioning device. The navigation system 50 is arranged on the grain processing host 10. The navigation system 50 navigates for the grain processing host 10. The grain processing host 10 executes automatic driving and operation based on the positioning information of the positioning device 40 and area planning information (such as divided areas and area boundary range) obtained by the image processing system 30, as well as a navigation information of the navigation system 50.

It should be noted that the areas of divisions and the boundary range of the farmland obtained by the image processing system 30 processing the image are updated to the navigation system 50 in real time to update the navigation information of the navigation system 50. In one embodiment, the navigation system 50 can be an inertial integrated navigation system. It is understood that the types of the navigation system 50 are only of an exemplary nature here, not a limitation, and therefore the navigation system 50 can also be other types of navigation devices.

Correspondingly, the grain processing host 10 of the automatic driving system for grain processing includes a vehicle 11, an operating system 12 arranged on the vehicle 11, and a driving control system 13. In one embodiment, the operation system 12 is driven by the vehicle 11, and executes a grain processing operation, such as a harvesting operation. The driving control system 13 controls the driving of the vehicle 11 and the operation of the operation system 12. It is worth mentioning that the driving control system 13 has a self-driving mode and an operator-controlled mode. When the automatic driving system for grain processing is in the self-dliving mode, the driving control system 13 automatically controls the operation of the vehicle 11 and the operation system 12. When in the operator-controlled mode, the driving control system 13 allows the driver to operate the vehicle 11 and control the operation of the operation system manually.

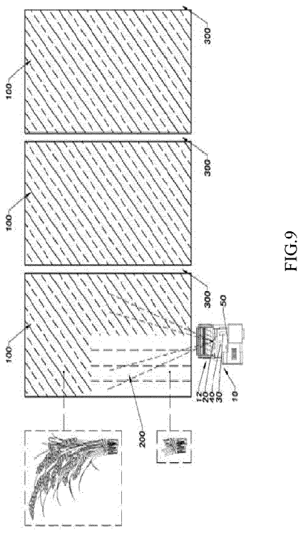

FIG. 9 of the present invention shows the implementation of the automatic driving system in the field of the self-driving and the harvesting operations. When the driving control system 13 of the grain processing host 10 is in the self-driving mode, the driving control system 13 acquires the positioning information of the vehicle 11 provided by the positioning device 40, the navigation information provided by the navigation system 50, and identification information of the area provided by the image processing system 30, and the vehicle 11 is controlled to travel in the unworked area 100 of the farmland to complete the grain harvesting operation. During the driving operation, the image acquisition device 20 acquires images of scene in front of the vehicle 11 in real time, wherein the image is identified by the image processing system 30 using the image segmentation recognition technology to identify the area and the area boundary range. When the divided area and area boundary range obtained by the image processing system 30 are inconsistent with the previous area and the boundary range, the image processing system 30 replaces the original area and area boundary range, and updates the navigation data of the navigation system 50 so that the driving control system 13 obtains new navigation information to adjust the driving and the working route of the vehicle 11.

According to an aspect of the present disclosure, the present disclosure provides a method for automatically identifying farmland area and farmland boundary, applied in the automatic driving system for grain processing to divide and identify the area of the farmland, thus convenient for the automatic driving system executing harvesting operation and self-driving, the method for automatically identifying farmland area and farmland boundary includes:
step (a): acquiring at least one image of the farmland around the grain processing host 10; and
step (b): segmenting the image by using image segmentation technology, identifying and dividing area of the image.

The step (a) further includes: based on the position and driving direction of the grain processing host 10, photographing the image around the grain processing host 10 in real time. The step (b) further includes: segmenting the image by using the image segmentation technology, and identifying and dividing the area of the image into the unworked area 100, the worked region 200, and the farmland boundary area 300. The step (b) further includes:
step (b.1): dividing the image into a plurality of the pixel regions 301, and normalizing the pixel values of the pixel regions 301 into an array;
step (b.2) : extracting the features of the pixel region 301 of each array; and
step (b.3): outputting a classification label of the image based on the features of the pixel region 301.

In the step (b.3) of the automatic identification method, the classification label corresponds to the unworked area 100, the worked area 200, and the farmland boundary area 300.

In the step (b) of the automatic identification method, the image processing system 30 uses the convolution neural network algorithm of deep learning to segment the image, identify and divide the area of the image.

The automatic identification method further includes: step (c): comparing whether the divided area identified by the image processing system 30 is consistent with the area boundary range identified by the image processing system 30, adjusting the divided areas and the area boundary range corresponding to the image when the divided area is not consistent with the area boundary range, and keeping the divided area and the area boundary range unchanged when the divided area is consistent with the area boundary range.

According to another aspect of the invention, the disclosure further provides an automatic driving method applied in the automatic driving system for grain processing, and the automatic driving method includes:
step (I) acquiring at least one image and identifying the area and the area boundary of the farmland in the image.
step (II) Based on the area and the area boundary of the farmland, controlling the grain processing host 10 to drive.

The step (I) includes the method for automatically identifying the farmland area and the farmland boundary provided by the invention. The driving control system 13 controls the driving and operation of the grain processing host 10 based on the farmland area and the farmland boundary identified by the image processing system 30.

The step (II) of the automatic driving method further includes:
obtaining the positioning information of the grain processing host 10;
based on the positioning information, identification information of the farmland, updating the navigation information of the navigation system.

Accordingly, in the step (II), the driving control system 13 controls the driving of the vehicle 11 of the grain processing host 10 according to the positioning information of the grain processing host 10, the area planning information of the farmland obtained by the image processing system 30, and the navigation information.

Preferably, the driving control system 13 controls the vehicle II to drive in the unworked area 100 to carry out an operation task.

Those skilled in the art should understand that the above description and the embodiments of the present disclosure shown in the drawings are only examples and do not limit the present disclosure. The purpose of the present disclosure has been completely and effectively achieved. The function and structure principle of the present disclosure have been shown and explained in the embodiments. Without departing from the principle, the implementation of the present disclosure may have any deformation or modification.

## Claims

1. A automatic identification method, applied in an automatic driving system for grain processing and identifying area of farmland, the automatic identification method comprising:
step (a):acquiring at least one image of farmland around a grain processing host;
step (b): segmenting the image into a plurality of pixel regions, and identifying the area of the image by an image segmentation identification technology.

2. The automatic identification method of claim 1, the step (a) further comprising:
based on position of the automatic driving system for grain processing, photographing the image around the automatic driving system for grain processing in real time.

3. The automatic identification method of claim 1, the step (b) further comprising:
segmenting the image by using the image segmentation technology, and identifying and dividing the area of the image into the unworked area, the worked region, and the farmland boundary area.

4. The automatic identification method of claim 3, the step (b) further comprising:
step (b.1): dividing the image into a plurality of the pixel regions, and normalizing the pixel values of the pixel regions into an array;
step (b.2): extracting features of the pixel regions of each array; and
step (b.3): outputting a classification label of the image based on the features of the pixel regions.

5. The automatic identification method of claim 4, wherein the classification label corresponds to the unworked area, the worked region, and the farmland boundary area.

6. The automatic identification method of claim 5, the step (b) further comprising:
an image processing system segmenting the image by a deep learning algorithm, identifying and dividing the area of the image.

7. The automatic identification method of claim 3, further comprising:
step (c): comparing whether the divided area identified by an image processing system is consistent with the area boundary range identified by the image processing system; adjusting the divided area and the area boundary range corresponding to the image when the divided area is not consistent with the area boundary range; and keeping the divided area and the area boundary range unchanged when the divided area is consistent with the area boundary range.

8. An automatic driving method in an automatic driving system for grain processing, comprising:
step (I): acquiring at least one image and identifying area of farmland and boundary of farmland in the image;
step (II): based on the area and the area boundary of the farmland, controlling a grain processing host to drive.

9. The automatic driving method of claim 8, the step (I) further comprising:
segmenting the image by an image segmentation identification technology; and
dividing the area of the image into the unworked area, the worked region, and the farmland boundary area.

10. The automatic driving method of claim 9, the step (II) further comprising:
obtaining positioning information of the grain processing host;
based on the positioning information, identification information of the farmland, updating navigation information of a navigation system.

11. The automatic driving method of claim 10, the step (II) further comprising:
a driving control system controlling a driving of a vehicle of the grain processing host according to the positioning information of the grain processing host, area planning information of the farmland, and the navigation information.

12. The automatic driving method of claim 11, the step (II) further comprising:
the driving control system controlling the vehicle to drive in the unworked area to carry out an operation task.

13. An automatic driving system for grain processing, comprising:
a grain processing host;
an image processing system, wherein the image processing system acquires at least one image of farmland, and identifies the area in the image based on an image segmentation recognition method, and the grain processing host controls automatic driving according to the area in the image identified by the image processing system.

14. The automatic driving system for grain processing of claim 13, wherein the automatic driving system for grain processing further comprises an image acquisition device, the image acquisition device is set on the grain processing host, and the image acquisition device acquires the image in front of the grain processing host, and transmits the acquired image to the image processing system for the image processing system identifying the area of the image.

15. The automatic driving system for grain processing of claim 14, wherein the image acquisition device is a camera device arranged in front of the grain processing host, wherein the image acquisition device acquires the image in front of the grain processing host by photographing.

16. The automatic driving system for grain processing of claim 14, wherein the image processing system identifies at least one worked area, at least one unworked area and at least one farmland boundary area from the image.

17. The automatic driving system for grain processing of claim 16, wherein the image processing system further comprises:
an image segmentation module, the image segmentation module segments the image into a plurality of pixel regions, and each pixel region includes at least one pixel unit;
a feature module, wherein the feature module extracts features of each pixel region based on the pixel unit of the pixel region; and
a region division module, wherein the region division module identifies and divides the area of the image according to the features of the pixel region.

18. The automatic driving system for grain processing of claim 17, wherein the feature module further comprises a pixel processing module, and the pixel processing module normalizes the pixel units of the pixel region into an array.

19. The automatic driving system for grain processing of claim 14, wherein the automatic driving system for grain processing further comprises a positioning device and a navigation system, the positioning device and the navigation system are arranged on the grain processing host, wherein the positioning device acquires position information of the grain processing host, and the navigation system provides navigation information for the grain processing host.

20. The automatic driving system for grain processing of claim 19, wherein the automatic driving system for grain processing further comprises a positioning device and a navigation system, the positioning device and the navigation system are arranged on the grain processing host, wherein the positioning device acquires positioning information of the grain processing host, and the navigation system provides navigation information for the grain processing host.

21. The automatic driving system for grain processing of claim 19, wherein the grain processing host further comprises:
a vehicle body, wherein the vehicle provides driving and operation power;
an operation system, wherein the operation system is arranged on the vehicle, and the operation system is driven by the vehicle; and
a driving control system, wherein the driving control system controls the vehicle to move and operate automatically based on the positioning information of the positioning device, the navigation information and image recognition information.

22. The automatic driving system for grain processing of claim 20, wherein the grain processing host further comprises:
a vehicle body, wherein the vehicle provides driving and operation power;
an operation system, wherein the operation system is arranged on the vehicle, and the operation system is driven by the vehicle; and
a driving control system, wherein the driving control system controls the vehicle to move and operate automatically based on the positioning information of the positioning device, the navigation information and image recognition information.
